# EUROPEAN PATENT APPLICATION

(11) **EP 4 797 193 A1**
(43) Date of publication of application: **26.08.2026**
(21) Application number: 26155652.6
(22) Date of filing: 02.02.2026
(51) Int. Cl.: G06Q 50/06, G06Q 10/04, H02J 3/00

(54) **METHODS AND SYSTEMS FOR AUTOMATIC CAPTURE OF BASELINE ENERGY CONSUMPTION AND ENERGY SAVINGS CALCULATION**

(30) Priority: 24.02.2025 IN 202511015957
(71) Applicant: Honeywell International Inc., Charlotte, NC 28202 (US)
(72) Inventor: BARIK, Bedabyas, Charlotte, 28202 (US); DUGAR, Devanshu, Charlotte, 28202 (US); ANTHRAPER, Juvin, Charlotte, 28202 (US); VALDER, Roshan, Charlotte, 28202 (US); YETTER, Scott J., Charlotte, 28202 (US); MR, Vishnu, Charlotte, 28202 (US)
(74) Representative: Haseltine Lake Kempner LLP

(57) **Abstract**

A method and system for determining estimated energy savings from an ON/OFF schedule of a connected power system. The system includes smart sockets with measurement units and ON/OFF switches connected to appliances in a building. A controller enters a baseline energy mode for a predetermined time period where all smart sockets switches remain ON while monitoring energy usage. The controller determines an estimated energy savings of the ON/OFF schedule based on the baseline energy usage and the OFF periods of the ON/OFF schedule.

## Description

### TECHNICAL FIELD

The present disclosure relates generally to connected power systems, and more particularly to connected power systems that provide energy savings.

### BACKGROUND

Connected power systems monitor power consumption within each of a plurality of smart sockets. Many smart sockets employ ON/OFF schedules in order to reduce energy consumption since many electrical devices consume power even when the electrical device is turned off. This is referred to as phantom energy consumption. Being able to completely turn off power to these electrical devices when they are not needed can provide significant energy savings. Many facilities wish to demonstrate the possible energy savings afforded by eliminating phantom and other energy consumption. What would be desirable are connected power systems that are able to monitor and calculate these energy savings. What would be desirable are connected power systems that are able to automatically determine a baseline energy consumption absent of any schedule, and then compare the baseline energy consumption with actual energy consumption while running a schedule in order to demonstrate energy consumption savings produced by the schedule.

### SUMMARY

The present disclosure relates generally to connected power systems, and more particularly to connected power systems that provide energy savings. An example may be found in a method for determining an estimated energy savings provided by an ON/OFF schedule of a connected power system. The connected power system includes a connected power system controller operatively coupled to a plurality of smart sockets of a building, wherein the plurality of smart sockets each include a measurement unit that is configured to sample an energy that is being delivered by the smart socket to a respective connected appliance, and wherein the plurality of smart sockets each include an ON/OFF switch that when in an ON state allows energy to be delivered by the smart socket to the respective connected appliance and when in an OFF state does not allow energy to be delivered by the smart socket to the respective connected appliance. The connected power system controller is configured to provide control commands to each of the plurality of smart sockets to control whether the ON/OFF switch of the respective smart socket is in the ON state or the OFF state. The ON/OFF schedule of the connected power system controller includes a programmable ON/OFF schedule for each of the plurality of smart sockets that, when activated, controls the ON/OFF switch of the respective one of the plurality of smart sockets in accordance with ON Periods and OFF periods of the respective ON/OFF schedule. The illustrative method includes entering a baseline energy mode of the connected power system controller for a predetermined baseline time period, wherein while in the baseline energy mode, the connected power system controller controls the ON/OFF switch of each of the plurality of smart sockets so as to remain in the ON state over the baseline time period. While in the baseline energy mode, the energy that is delivered by the respective smart socket to their respective connected appliance is monitored via the measurement unit of each of the plurality of smart sockets, resulting in a baseline energy usage. The estimated energy savings provided by the ON/OFF schedule of the connected power system is determined based on the baseline energy usage in conjunction with the OFF periods of the ON/OFF schedule of the connected power system. The estimated energy savings are displayed on a display of the connected power system.

Another example may be found in a connected power system for a building. The connected power system includes a plurality of smart sockets. Each of the plurality of smart sockets include a measurement unit that is configured to sample an energy that is being delivered by the smart socket to a respective connected appliance. Each of the plurality of smart sockets include an ON/OFF switch that when in an ON state allows energy to be delivered by the smart socket to the respective connected appliance and when in an OFF state does not allow energy to be delivered by the smart socket to the respective connected appliance. A connected power system controller is operatively coupled to the plurality of smart sockets. The connected power system controller is configured to provide control commands to each of the plurality of smart sockets to control whether the ON/OFF switch of the respective smart socket is in the ON state or the OFF state. An ON/OFF schedule of the connected power system controller includes a programmable ON/OFF schedule for each of the plurality of smart sockets that, when activated, controls the ON/OFF switch of the respective one of the plurality of smart sockets in accordance with ON Periods and OFF periods of the respective ON/OFF schedule. The connected power system controller is configured to enter a baseline energy mode for a predetermined baseline time period, wherein while in the baseline energy mode, the connected power system controller controls the ON/OFF switch of each of the plurality of smart sockets so as to remain in the ON state over the baseline time period. While in the baseline energy mode, the connected power controller is configured to monitor via the measurement unit of each of the plurality of smart sockets the energy that is delivered by the respective smart socket to their respective connected appliance, resulting in a baseline energy usage. The connected power controller is configured to determine an estimated energy savings provided by the ON/OFF schedule of the connected power system based on the baseline energy usage in conjunction with the OFF periods of the ON/OFF schedule of the connected power system and to display the estimated energy savings on a display of the connected power system.

Another example may be found in a non-transitory computer readable medium storing instructions thereon. When the instructions are executed by one or more processors, the one or more processors are caused to enter a baseline energy mode of a connected power system controller for a predetermined baseline time period, wherein while in the baseline energy mode, control an ON/OFF switch of each of a plurality of smart sockets so as to remain in the ON state over the baseline time period. The one or more processors, while in the baseline energy mode, are caused to monitor via a measurement unit of each of the plurality of smart sockets the energy that is delivered by the respective smart socket to their respective connected appliance, resulting in a baseline energy usage. The one or more processors are caused to determine an estimated energy savings provided by an ON/OFF schedule of the connected power system based on the baseline energy usage in conjunction with OFF periods of the ON/OFF schedule of the connected power system. The one or more processors are caused to display the estimated energy savings on a display.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative connected power system;
Figures 2A, 2B and 2C are flow diagrams that together show an illustrative method for determining an estimated energy savings provided by an ON/OFF schedule of a connected power system; and
Figures 3 through 7 are illustrative screen captures.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

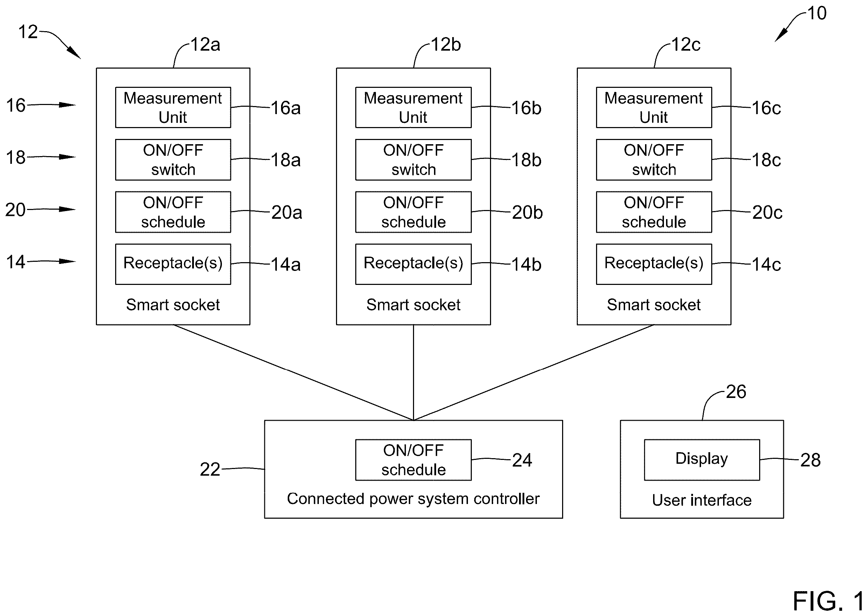

Figure 1 is a schematic block diagram showing an illustrative connected power system 10. The illustrative connected power system 10 includes a plurality of smart sockets 12, individually labeled as 12a, 12b, and 12c. While a total of three smart sockets 12 are shown, this is merely illustrative, as the connected power system 10 may include any number of smart sockets 12 and in some cases may include considerably more than three smart sockets 12. Each of the smart socket 12 include one or more receptacle(s) 14, individually labeled as 14a, 14b, and 14c, which may be used to electrically and mechanically couple plugs from a variety of appliances and other electrical devices to a source of electricity. Each of the smart sockets 12 include a measurement unit 16, individually labeled as 16a, 16b, and 16c, that is configured to sample an energy that is delivered by the smart socket 12 to a respective connected appliance over time. Each of the smart sockets 12 include an ON/OFF switch 18, individually labeled as 18a, 18b, and 18c that may be switched between an ON state and an OFF state. When the ON/OFF switch 18 is in the ON state, energy is allowed to be delivered by the smart socket 12 through the receptacle(s) 14 and to the respective connected appliance. When the ON/OFF switch 18 is in the OFF state, no energy is allowed to be delivered by the smart socket 12 through the receptacle(s) 14 to the respective connected appliance. In some cases, each of the smart sockets 12 include an ON/OFF schedule 20, individually labeled as 20a, 20b, and 20c, that specifies when energy is to be provided to the receptacle(14) and when energy is not to be provided to the receptacle(s) 14, absent instructions to the contrary from the connected power system 10. In some cases, each of the smart sockets 12 do not store a local ON/OFF schedule 20 as shown, but rather are controlled by receiving ON and OFF commands from a connected power system controller 22 that itself includes an ON/OFF schedule 24.

The illustrative connected power system 10 includes a connected power system controller 22 that is operatively coupled to the plurality of smart sockets 12. The connected power system controller 22 may be configured to provide control commands to each of the plurality of smart sockets 12 to control whether the ON/OFF switch 18 of the respective smart socket 12 is in the ON state or the OFF state. The connected power system controller 22 includes an ON/OFF schedule 24 including a programmable ON/OFF schedule for each of the plurality of smart sockets 12 that, when activated, controls the ON/OFF switch 18 of the respective one of the plurality of smart sockets 12 in accordance with ON Periods and OFF periods of the respective ON/OFF schedule. In some instances, the associated portion of the ON/OFF schedule 24 of the connected power system controller 22 may be communicated to each of the smart sockets 12 and stored as a local ON/OFF schedule 20. When so provided, each of the smart sockets 12 may continue to operate in accordance with the local ON/OFF schedule 20 even when communication between the smart sockets 12 and the connected power system controller 22 is down. The local ON/OFF schedule 20 may be updated whenever a change is made the associated part of the programmable ON/OFF schedule of the connected power system controller 22.

The connected power system controller 22 may be programmed to enter a baseline energy mode for a predetermined baseline time period, wherein while in the baseline energy mode, the connected power system controller 22 controls the ON/OFF switch 18 of each of the plurality of smart sockets 12 to remain in the ON state over the baseline time period. While in the baseline energy mode, the connected power system controller 22 may be configured to monitor via the measurement unit 16 of each of the plurality of smart sockets 12 the energy that is delivered by the respective smart socket 12 to their respective connected appliance, resulting in a baseline energy usage. The baseline energy usage is then stored by the connected power system controller 22. In some cases, the connected power system controller 22 may be configured to receive a user input via the user interface 26 that defines the predetermined baseline time period. In some cases, the baseline time period is at least two weeks. In some cases, the connected power system 10 may identify patterns in the baseline energy usage (e.g. using Machine Learning and/or Artificial Intelligence), and automatically adjust the length of the baseline time period based on the identified patterns in the baseline energy usage.

The connected power system controller 22 may be configured to determine an estimated energy savings provided by the ON/OFF schedule 24 of the connected power system 10 based on the baseline energy usage in conjunction with the OFF periods of the ON/OFF schedule 24 of the connected power system 10. In some cases, the estimated energy savings provided by the ON/OFF schedule of the connected power system 10 may be based on the baseline energy usage in conjunction with the OFF periods of each of the programmable ON/OFF schedule 20 of the plurality of smart sockets 12. In either case, ,the connected power system controller 22 may be configured to display the estimated energy savings on a display of the connected power system 10. As an example, the connected power system 10 may include a user interface 26 having a display 28.

In some cases, the connected power system controller 22 may use Machine Learning and/or Artificial Intelligence (AI) to recommend changes to the ON/OFF schedule 24 of the connected power system 10 to realize additional energy savings. In some cases, the connected power system 10 may automatically implement the recommended changes to the ON/OFF schedule 24 of the connected power system 10.

In some cases, while in the baseline energy mode, the connected power system controller 22 may disable the ON/OFF schedule 24 of the connected power system 10 and/or the ON/OFF schedule 20 of each of the plurality of smart sockets 12. In some cases, the connected power system controller 22 may be configured to exit the baseline energy mode and enter an operational mode. While in the operational mode, the connected power system controller 22 may be configured to activate the ON/OFF schedule 24 of the connected power system 10 and./or the ON/OFF schedule 20 of each of the plurality of smart sockets 12. While in the operational mode, the connected power system controller 22 may be configured to monitor via the measurement unit 16 of each of plurality of smart sockets 12 the energy that is delivered by the respective smart socket 12 to their respective connected appliance through the respective receptacle(s) 14, resulting in an operational energy usage. While in the operational mode, the connected power system controller 22 may be configured to concurrently display on the display 28 of the connected power system 10 the estimated energy savings provided by the ON/OFF schedule 24 of the connected power system 10 and the operational energy usage.

In some cases, the connected power system controller 22 may be configured to reenter the baseline energy mode for a second predetermined baseline time period. While in the baseline energy mode, the connected power system controller 22 may control the ON/OFF switch 18 of each of the plurality of smart sockets 12 so as to remain in the ON state over the second baseline time period. While in the baseline energy mode, the connected power system controller 22 may be configured to monitor via the measurement unit 16 of each of plurality of smart sockets 12 the energy that is delivered by the respective smart socket 12 to their respective connected appliance, resulting in a second baseline energy usage. The connected power system controller 22 may be configured to determine the estimated energy savings provided by the ON/OFF schedule 24 of the connected power system 10 based on the second baseline energy usage in conjunction with the OFF periods of the ON/OFF schedule 24 of the connected power system. The connected power system controller 22 may be configured to display the estimated energy savings on the display 28 of the connected power system 10.

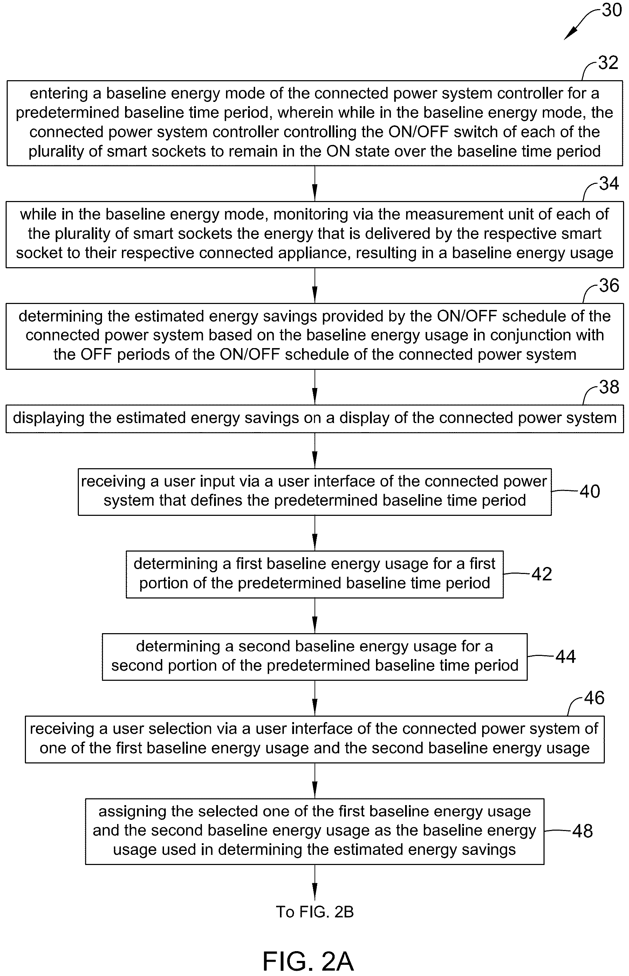

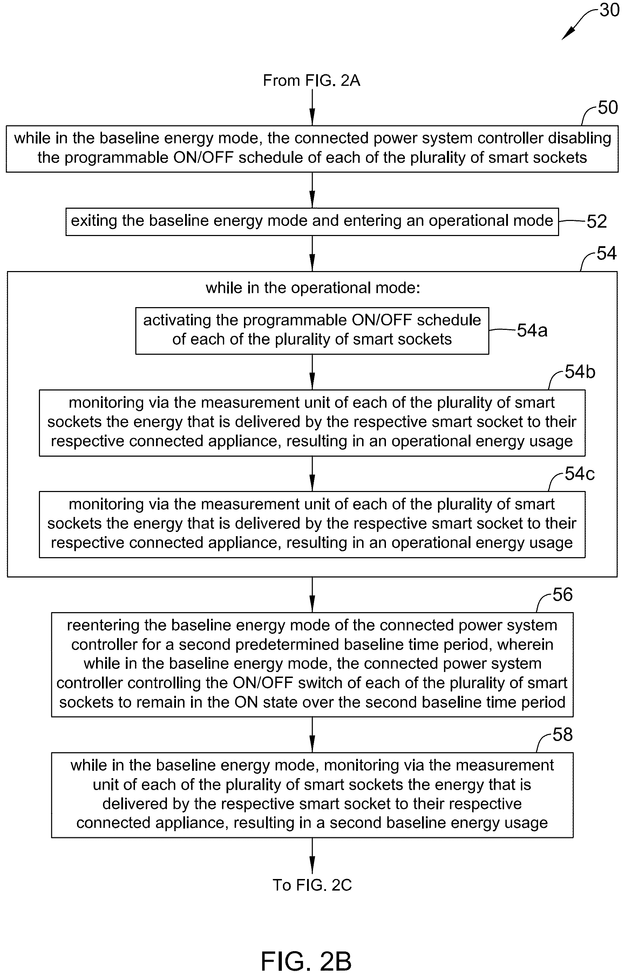

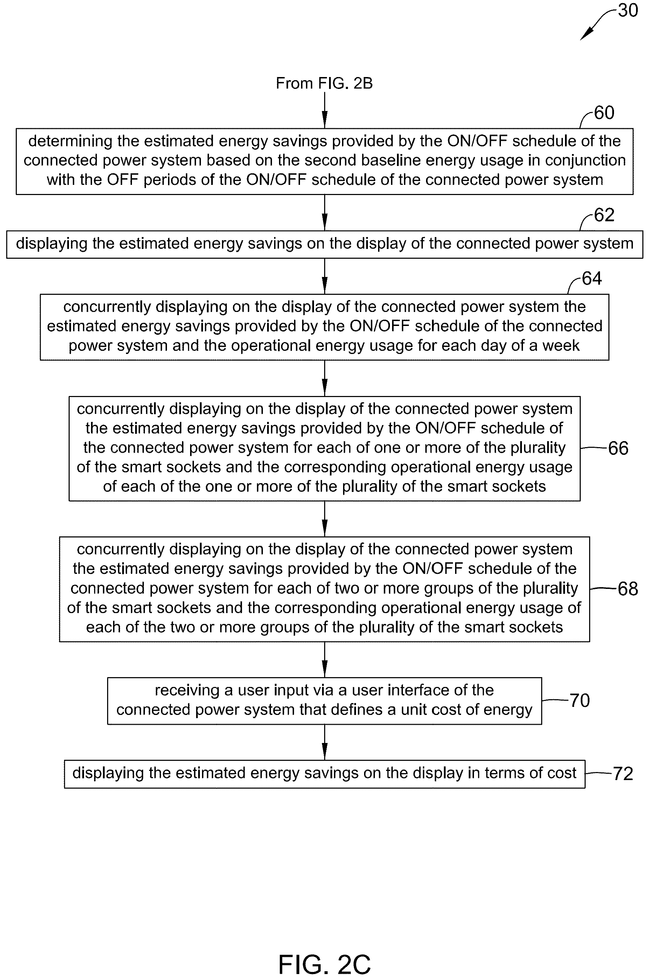

Figures 2A, 2B, and 2C are flow diagrams that together show an illustrative method 30 for determining an estimated energy savings provided by an ON/OFF schedule of the connected power system 10 that includes the connected power system controller 22 that is operatively coupled to a plurality of smart sockets 12 of a building. The plurality of smart sockets 12 each include a measurement unit 16 that is configured to sample an energy that is being delivered by the smart socket 12 to a respective connected appliance over time. The plurality of smart sockets 12 each include the ON/OFF switch 18 that when in an ON state allows energy to be delivered by the smart socket 12 to the respective connected appliance and when in an OFF state does not allow energy to be delivered by the smart socket 12 to the respective connected appliance. The connected power system controller 22 is configured to provide control commands to each of the plurality of smart sockets 12 to control whether the ON/OFF switch 18 of the respective smart socket 12 is in the ON state or the OFF state. The ON/OFF schedule 24 of the connected power system controller 22 includes a programmable ON/OFF schedule for each of the plurality of smart sockets 12 that, when activated, controls the ON/OFF switch 18 of the respective one of the plurality of smart sockets 12 in accordance with ON Periods and OFF periods of the respective ON/OFF schedule.

The illustrative method 30 includes entering a baseline energy mode of the connected power system controller 22 for a predetermined baseline time period. While in the baseline energy mode, the connected power system controller 22 controls the ON/OFF switch 18 of each of the plurality of smart sockets 12 so as to remain in the ON state over the baseline time period, as indicated at block 32. While in the baseline energy mode, the energy that is delivered by the respective smart socket 12 to their respective connected appliance is monitored via the measurement unit 16 of each of the plurality of smart sockets 12, resulting in a baseline energy usage, as indicated at block 34. The estimated energy savings provided by the ON/OFF schedule 24 of the connected power system 10 is determined based on the baseline energy usage in conjunction with the OFF periods of the ON/OFF schedule of the connected power system, as indicated at block 36. The estimated energy savings are displayed on the display 28 of the connected power system 10, as indicated at block 38.

In some cases, the method 30 may include receiving a user input via the user interface 26 of the connected power system 10 that defines the predetermined baseline time period, as indicated at block 40. As an example, the predetermined baseline time period may be prevented from having a length of time that is less than two weeks. In some cases, the baseline energy usage may be representative of an average energy usage over at least part of the predetermined baseline time period. In some cases, the estimated energy savings provided by the ON/OFF schedule 24 of the connected power system 10 may be based on the baseline energy usage in conjunction with the OFF periods of each of the programmable ON/OFF schedules 20 associated with the plurality of smart sockets 12.

In some cases, the method 30 may include determining a first baseline energy usage for a first portion of the predetermined baseline time period, as indicated at block 42. A second baseline energy usage for a second portion of the predetermined baseline time period may be determined, as indicated at block 44. A user selection may be received via the user interface 26 of the connected power system 10 of one of the first baseline energy usage and the second baseline energy usage, as indicated at block 46. The selected one of the first baseline energy usage and the second baseline energy usage may be assigned as the baseline energy usage used in determining the estimated energy savings, as indicated at block 48. Continuing on Figure 2B, the method 30 may include the connected power system controller 22 disabling the programmable ON/OFF schedule 20 associated with each of the plurality of smart sockets 21 while in the baseline energy mode, as indicated at block 50.

In some cases, the method 30 may include exiting the baseline energy mode and entering an operational mode, as indicated at block 52. The method 30 may involve several steps while in the operational mode, as indicated at block 54. The several steps may include activating the programmable ON/OFF schedule 20 of each of the plurality of smart sockets 12, as indicated at block 54a. The several steps may include monitoring via the measurement unit 16 of each of the plurality of smart sockets 12 the energy that is delivered by the respective smart socket 12 to their respective connected appliance, resulting in an operational energy usage, as indicated at block 54b. The several steps may include concurrently displaying on the display 28 of the connected power system 10 the estimated energy savings provided by the ON/OFF schedule 24 of the connected power system 10 and the operational energy usage, as indicated at block 54c.

In some cases, the method 30 may include reentering the baseline energy mode of the connected power system controller 22 for a second predetermined baseline time period, wherein while in the baseline energy mode, the connected power system controller 22 may control the ON/OFF switch 18 of each of the plurality of smart sockets 12 to remain in the ON state over the second baseline time period, as indicated at block 56. While in the baseline energy mode, the method 30 may include monitoring via the measurement unit 16 of each of the plurality of smart sockets 12 the energy that is delivered by the respective smart socket 12 to their respective connected appliance, resulting in a second baseline energy usage, as indicated at block 58. Continuing on Figure 2C, the method 30 may include determining the estimated energy savings provided by the ON/OFF schedule 24 of the connected power system 10 based on the second baseline energy usage in conjunction with the OFF periods of the ON/OFF schedule 24 of the connected power system 10, as indicated at block 60. The estimated energy savings may be displayed on the display 28 of the connected power system 10, as indicated at block 62.

In some cases, the method 30 may include concurrently displaying on the display 28 of the connected power system 10 the estimated energy savings provided by the ON/OFF schedule of the connected power system 10 and the operational energy usage for each day of a week, as indicated at block 64. In some cases, the method 30 may include concurrently displaying on the display 28 of the connected power system 10 the estimated energy savings provided by the ON/OFF schedule 24 of the connected power system 10 for each of one or more of the plurality of the smart sockets 12 and the corresponding operational energy usage of each of the one or more of the plurality of the smart sockets 12, as indicated at block 66. In some cases, the method 30 may include concurrently displaying on the display 28 of the connected power system 10 the estimated energy savings provided by the ON/OFF schedule 24 of the connected power system 10 for each of two or more groups of the plurality of the smart sockets 12 and the corresponding operational energy usage of each of the two or more groups of the plurality of the smart sockets 12.

In some cases, the method 30 may include receiving a user input via a user interface of the connected power system that defines a unit cost of energy (e.g. dollars per kWH), as indicated at block 70. The estimated energy savings may be displayed on the display 28 in terms of cost, as indicated at block 72.

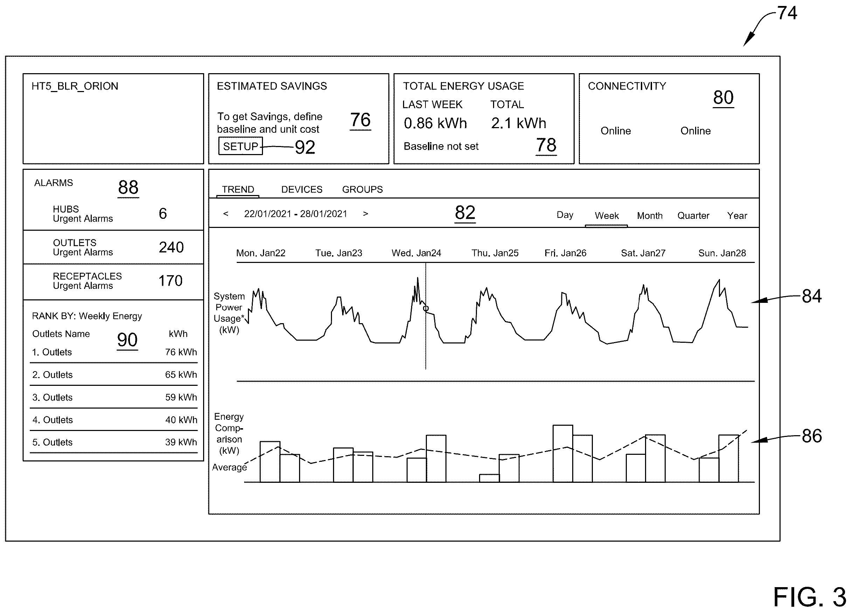

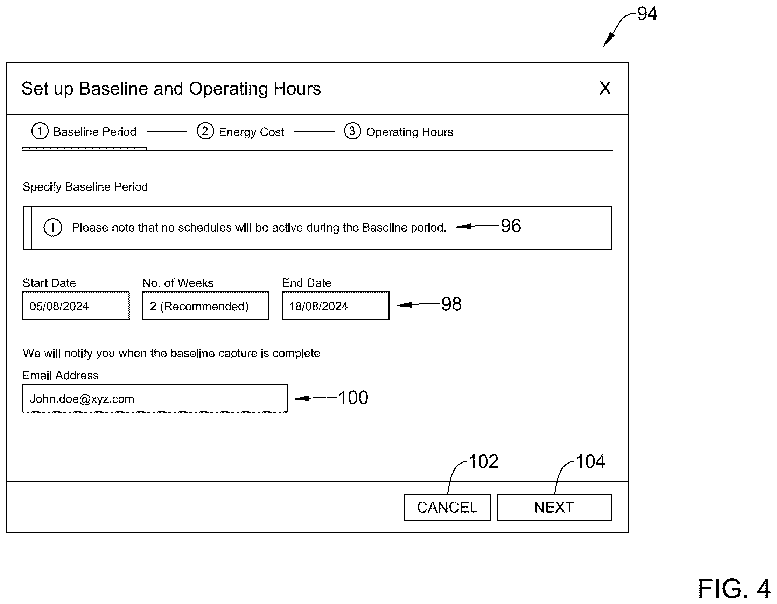

Figures 3 through 7 provide illustrative screen captures showing certain features of a dashboard (Figure 3) and various popup screens (Figures 4 through 7) that may be generated by the connected power system controller 22 and displayed on the display 28. Figure 3 shows a dashboard 74 that may be displayed by the connected power system controller 22. Across the top, the dashboard 74 includes an estimated savings widget 76, a total energy usage widget 78 and a connectivity widget 80. In some cases, after the baseline has been set, the total energy usage widget 78 may display additional information regarding actual and/or expected energy consumption. A central region 82 may display any of trends, devices, and groups. As shown, the central region is displaying trends, including a system power usage trend 84 and an energy comparison trend 86. In some cases, the energy comparison trend 86 may include bars that indicate scheduled-based energy savings. In some cases, the energy comparison trend 86 may include bars that indicate non-operating (OFF) hours energy savings. In some cases, non-operating (OFF) hours energy savings may not be shown. In some cases, the energy comparison trend 86 may display actual energy consumption. In some cases, the energy consumption trend 86 may display combinations of these. Along the left side of the dashboard 74, an alarms widget 88 displays alarm information. A ranking widget 90 provides a listing of which smart sockets are providing the most energy to connected appliances.

As shown, the estimated savings widget 76 displays a setup button 92 because a baseline and unit cost have not yet been defined. After the baseline and unit cost have been determined, the estimated savings widget 76 may instead display information relating to savings such as cost savings and energy savings as a result of operating under a schedule, relative to baseline energy consumption. In some cases, cost savings is the amount saved by reducing usage compared to the baseline, calculated based on the cost of electricity. In some cases, energy savings is a percentage and kWh of electricity saved by reducing usage relative to the baseline.

Selecting the setup button 92 causes a screen 94 to be displayed, as shown in Figure 4. In some cases, the screen 94 may be displayed as a popup floating over the dashboard 74. The screen 94 allows a user to set a period of time for capturing a baseline energy usage. The screen 94 includes a warning 96 indicating that no schedules will be active during the baseline period (e.g. all schedules will be automatically deactivated during the baseline period of time). The screen 94 includes a section 98 that allows the user to enter a start date, a duration, and an ending date for the baseline period. The screen 94 includes a section 100 that allows the user to enter contact information such as an email address. The screen 94 includes a CANCEL button 102 that allows a user to cancel and a NEXT button 104 that allows the user to save the entered information and move to a subsequent screen.

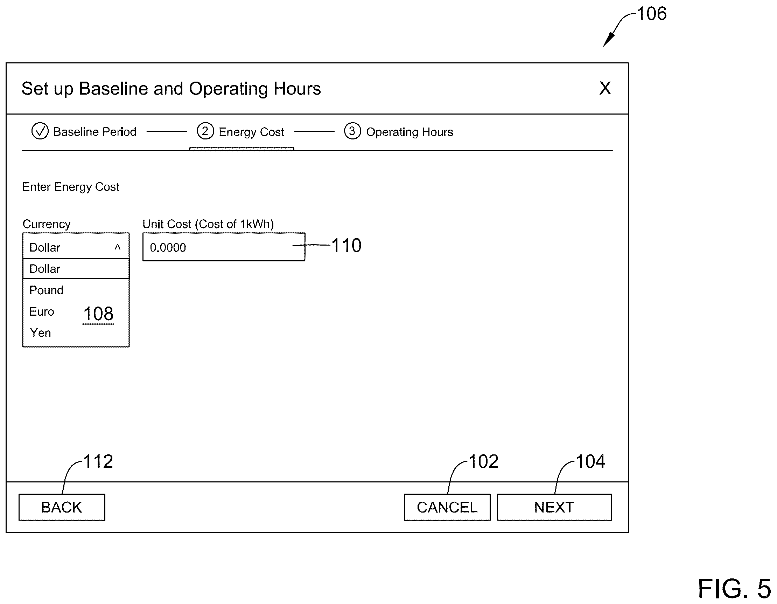

Figure 5 shows a screen 106 that may be displayed as a result of selecting the NEXT button 104 on the screen 94 (Figure 4). The screen 106 includes a currency section 108 that allows the user to select their preferred currency for display. The screen 106 also includes a unit cost section 110 that allows the user to inform the connected power system controller 22 of the cost of 1 kilowatt-hour of energy. The cost may depend on the local utility. The screen 106 includes the CANCEL button 102 that allows a user to cancel and the NEXT button 104 that allows the user to save the entered information and move to a subsequent screen. The screen 106 also includes a BACK button 112 that allows the user to revert to a previous screen.

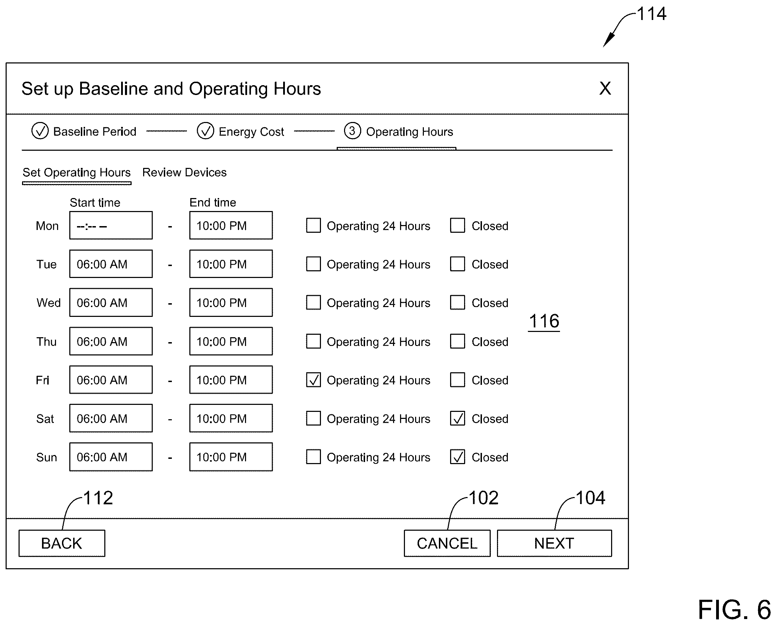

Figure 6 shows a screen 114 that may be displayed as a result of selecting the NEXT button 104 on the screen 106 (Figure 5). The screen 114 includes a section 116 that allows the user to enter schedule information including operating hours (e.g. define the ON/OFF schedule 24 of a connected power system). The screen 106 includes the CANCEL button 102 that allows a user to cancel, the NEXT button 104 that allows the user to save the entered information and move to a subsequent screen, and the BACK button 112 that allows the user to revert to a previous screen.

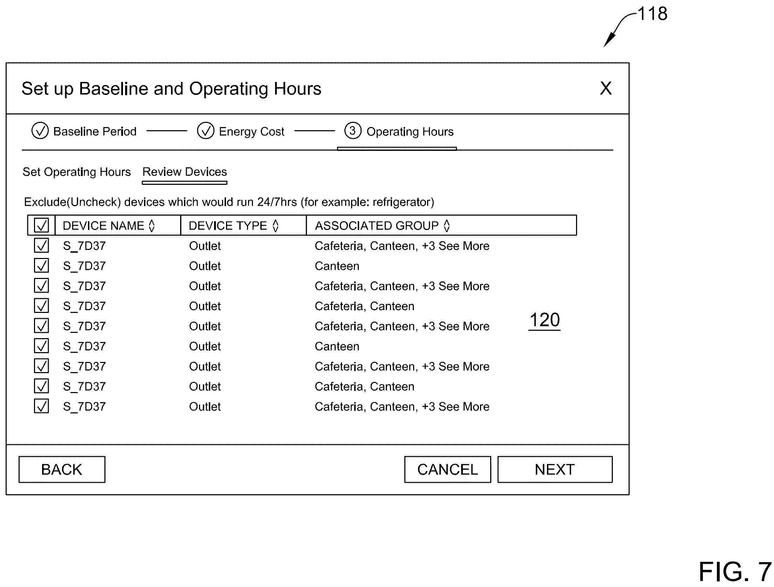

Figure 7 shows a screen 118 that may be displayed as a result of selecting the NEXT button 104 on the screen 114 (Figure 6). The screen 118 includes a section 120 that allows the user to select and/or review particular smart socket devices. The screen 118 includes a section 116 that allows the user to enter schedule information including operating hours for individual or groups of smart socket devices. The screen 106 includes the CANCEL button 102 that allows a user to cancel, the NEXT button 104 that allows the user to save the entered information and move to a subsequent screen, and the BACK button 112 that allows the user to revert to a previous screen.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for determining an estimated energy savings provided by an ON/OFF schedule of a connected power system, wherein the connected power system includes a connected power system controller operatively coupled to a plurality of smart sockets of a building, wherein the plurality of smart sockets each include a measurement unit that is configured to sample an energy that is being delivered by the smart socket to a respective connected appliance, and wherein the plurality of smart sockets each include an ON/OFF switch that when in an ON state allows energy to be delivered by the smart socket to the respective connected appliance and when in an OFF state does not allow energy to be delivered by the smart socket to the respective connected appliance, the connected power system controller is configured to provide control commands to each of the plurality of smart sockets to control whether the ON/OFF switch of the respective smart socket is in the ON state or the OFF state, and wherein ON/OFF schedule of the connected power system controller includes a programmable ON/OFF schedule for each of the plurality of smart sockets that, when activated, controls the ON/OFF switch of the respective one of the plurality of smart sockets in accordance with ON Periods and OFF periods of the respective ON/OFF schedule, the method comprising:
entering a baseline energy mode of the connected power system controller for a predetermined baseline time period, wherein while in the baseline energy mode, the connected power system controller controlling the ON/OFF switch of each of the plurality of smart sockets to remain in the ON state over the baseline time period;
while in the baseline energy mode, monitoring via the measurement unit of each of the plurality of smart sockets the energy that is delivered by the respective smart socket to their respective connected appliance, resulting in a baseline energy usage;
determining the estimated energy savings provided by the ON/OFF schedule of the connected power system based on the baseline energy usage in conjunction with the OFF periods of the ON/OFF schedule of the connected power system; and
displaying the estimated energy savings on a display of the connected power system.

2. The method of claim 1, comprising receiving a user input via a user interface of the connected power system that defines the predetermined baseline time period.

3. The method of claim 2, wherein the predetermined baseline time period is prevented from having a length of time that is less than two weeks.

4. The method of any one of claims 1-3, comprising:
determining a first baseline energy usage for a first portion of the predetermined baseline time period;
determining a second baseline energy usage for a second portion of the predetermined baseline time period;
receiving a user selection via a user interface of the connected power system of one of the first baseline energy usage and the second baseline energy usage; and
assigning the selected one of the first baseline energy usage and the second baseline energy usage as the baseline energy usage used in determining the estimated energy savings.

5. The method of any one of claims 1-4, wherein the baseline energy usage is representative of an average energy usage over at least part of the predetermined baseline time period.

6. The method of any one of claims 1-5, wherein the estimated energy savings provided by the ON/OFF schedule of the connected power system is based on the baseline energy usage in conjunction with the OFF periods of each of the programmable ON/OFF schedule of the plurality of smart sockets.

7. The method of any one of claims 1-6, further comprising, while in the baseline energy mode, the connected power system controller disabling the programmable ON/OFF schedule of each of the plurality of smart sockets.

8. The method of any one of claims 1-7, further comprising:
exiting the baseline energy mode and entering an operational mode;
while in the operational mode;
activating the programmable ON/OFF schedule of each of the plurality of smart sockets;
monitoring via the measurement unit of each of the plurality of smart sockets the energy that is delivered by the respective smart socket to their respective connected appliance, resulting in an operational energy usage; and
concurrently displaying on the display of the connected power system the estimated energy savings provided by the ON/OFF schedule of the connected power system and the operational energy usage.

9. The method of claim 8, further comprising:
reentering the baseline energy mode of the connected power system controller for a second predetermined baseline time period, wherein while in the baseline energy mode, the connected power system controller controlling the ON/OFF switch of each of the plurality of smart sockets to remain in the ON state over the second baseline time period;
while in the baseline energy mode, monitoring via the measurement unit of each of the plurality of smart sockets the energy that is delivered by the respective smart socket to their respective connected appliance, resulting in a second baseline energy usage;
determining the estimated energy savings provided by the ON/OFF schedule of the connected power system based on the second baseline energy usage in conjunction with the OFF periods of the ON/OFF schedule of the connected power system; and
displaying the estimated energy savings on the display of the connected power system.

10. The method of either of claims 8 or 9, further comprising concurrently displaying on the display of the connected power system the estimated energy savings provided by the ON/OFF schedule of the connected power system and the operational energy usage for each day of a week.

11. The method of either of claims 8 or 9, further comprising concurrently displaying on the display of the connected power system the estimated energy savings provided by the ON/OFF schedule of the connected power system for each of one or more of the plurality of the smart sockets and the corresponding operational energy usage of each of the one or more of the plurality of the smart sockets.

12. The method of either of claims 8 or 9, further comprising concurrently displaying on the display of the connected power system the estimated energy savings provided by the ON/OFF schedule of the connected power system for each of two or more groups of the plurality of the smart sockets and the corresponding operational energy usage of each of the two or more groups of the plurality of the smart sockets.

13. The method of any of claims 1-12, further comprising:
receiving a user input via a user interface of the connected power system that defines a unit cost of energy; and
displaying the estimated energy savings on the display in terms of cost.

14. A connected power system for a building, comprising:
a plurality of smart sockets, wherein the plurality of smart sockets each include a measurement unit that is configured to sample an energy that is being delivered by the smart socket to a respective connected appliance, and wherein the plurality of smart sockets each include an ON/OFF switch that when in an ON state allows energy to be delivered by the smart socket to the respective connected appliance and when in an OFF state does not allow energy to be delivered by the smart socket to the respective connected appliance;
a connected power system controller operatively coupled to the plurality of smart sockets, the connected power system controller is configured to provide control commands to each of the plurality of smart sockets to control whether the ON/OFF switch of the respective smart socket is in the ON state or the OFF state, and wherein an ON/OFF schedule of the connected power system controller includes a programmable ON/OFF schedule for each of the plurality of smart sockets that, when activated, controls the ON/OFF switch of the respective one of the plurality of smart sockets in accordance with ON Periods and OFF periods of the respective ON/OFF schedule, the connected power system controller is configured to:
enter a baseline energy mode for a predetermined baseline time period, wherein while in the baseline energy mode, the connected power system controller controls the ON/OFF switch of each of the plurality of smart sockets to remain in the ON state over the baseline time period;
while in the baseline energy mode, monitor via the measurement unit of each of the plurality of smart sockets the energy that is delivered by the respective smart socket to their respective connected appliance, resulting in a baseline energy usage;
determine an estimated energy savings provided by the ON/OFF schedule of the connected power system based on the baseline energy usage in conjunction with the OFF periods of the ON/OFF schedule of the connected power system; and
display the estimated energy savings on a display of the connected power system.

15. A non-transitory computer readable medium storing instructions thereon that when executed by one or more processors causes the one or more processors to:
enter a baseline energy mode of a connected power system controller for a predetermined baseline time period, wherein while in the baseline energy mode, control an ON/OFF switch of each of a plurality of smart sockets to remain in the ON state over the baseline time period;
while in the baseline energy mode, monitor via a measurement unit of each of the plurality of smart sockets the energy that is delivered by the respective smart socket to their respective connected appliance, resulting in a baseline energy usage;
determine an estimated energy savings provided by an ON/OFF schedule of the connected power system based on the baseline energy usage in conjunction with OFF periods of the ON/OFF schedule of the connected power system; and
display the estimated energy savings on a display.

## Amended claims

### Amended claims in accordance with Rule 137(2) EPC.

1. A method for determining an estimated energy savings provided by an ON/OFF schedule of a connected power system, wherein the connected power system includes a connected power system controller operatively coupled to a plurality of smart sockets of a building, wherein the plurality of smart sockets each include a measurement unit that is configured to sample an energy that is being delivered by the smart socket to a respective connected appliance, and wherein the plurality of smart sockets each include an ON/OFF switch that when in an ON state allows energy to be delivered by the smart socket to the respective connected appliance and when in an OFF state does not allow energy to be delivered by the smart socket to the respective connected appliance, the connected power system controller is configured to provide control commands to each of the plurality of smart sockets to control whether the ON/OFF switch of the respective smart socket is in the ON state or the OFF state, and wherein ON/OFF schedule of the connected power system controller includes a programmable ON/OFF schedule for each of the plurality of smart sockets that, when activated, controls the ON/OFF switch of the respective one of the plurality of smart sockets in accordance with ON Periods and OFF periods of the respective ON/OFF schedule, the method comprising:
entering a baseline energy mode of the connected power system controller for a predetermined baseline time period, wherein while in the baseline energy mode the power system controller disables the programmable ON/OFF schedule of each of the plurality of smart sockets, and controlling the ON/OFF switch of each of the plurality of smart sockets to remain in the ON state over the baseline time period;
while in the baseline energy mode, monitoring via the measurement unit of each of the plurality of smart sockets the energy that is delivered by the respective smart socket to their respective connected appliance, resulting in a baseline energy usage;
exiting the baseline energy mode and entering an operational mode;
while in the operational mode, activating the programmable ON/OFF schedule of each of the plurality of smart sockets, and monitoring via the measurement unit of each of the plurality of smart sockets for each of the plurality of smart sockets the energy that is delivered by the respective smart socket to their respective connected appliance, resulting in an operational energy usage;
determining the estimated energy savings provided by the ON/OFF schedule of the connected power system based on the baseline energy usage determined during the baseline energy mode in conjunction with the OFF periods of the ON/OFF schedule of the connected power system and the operational energy usage determined during the operational mode; and
concurrently displaying the estimated energy savings provided by the ON/OFF schedule of the connected power system and the operational energy usage on a display of the connected power system.

2. The method of claim 1, comprising receiving a user input via a user interface of the connected power system that defines the predetermined baseline time period.

3. The method of claim 2, wherein the predetermined baseline time period is prevented from having a length of time that is less than two weeks.

4. The method of any one of claims 1-3, comprising:
determining a first baseline energy usage for a first portion of the predetermined baseline time period;
determining a second baseline energy usage for a second portion of the predetermined baseline time period;
receiving a user selection via a user interface of the connected power system of one of the first baseline energy usage and the second baseline energy usage; and
assigning the selected one of the first baseline energy usage and the second baseline energy usage as the baseline energy usage used in determining the estimated energy savings.

5. The method of any one of claims 1-4, wherein the baseline energy usage is representative of an average energy usage over at least part of the predetermined baseline time period.

6. The method of any one of claims 1-5, wherein the estimated energy savings provided by the ON/OFF schedule of the connected power system is based on the baseline energy usage in conjunction with the OFF periods of each of the programmable ON/OFF schedule of the plurality of smart sockets.

7. The method of any one of claims 1-6, further comprising:
reentering the baseline energy mode of the connected power system controller for a second predetermined baseline time period, wherein while in the baseline energy mode, the connected power system controller controlling the ON/OFF switch of each of the plurality of smart sockets to remain in the ON state over the second baseline time period;
while in the baseline energy mode, monitoring via the measurement unit of each of the plurality of smart sockets the energy that is delivered by the respective smart socket to their respective connected appliance, resulting in a second baseline energy usage;
determining the estimated energy savings provided by the ON/OFF schedule of the connected power system based on the second baseline energy usage in conjunction with the OFF periods of the ON/OFF schedule of the connected power system; and
displaying the estimated energy savings on the display of the connected power system.

8. The method of any one of claims 1-7, further comprising concurrently displaying on the display of the connected power system the estimated energy savings provided by the ON/OFF schedule of the connected power system and the operational energy usage for each day of a week.

9. The method of any one of claims 1-7, further comprising concurrently displaying on the display of the connected power system the estimated energy savings provided by the ON/OFF schedule of the connected power system for each of one or more of the plurality of the smart sockets and the corresponding operational energy usage of each of the one or more of the plurality of the smart sockets.

10. The method of any one of claims 1-7, further comprising concurrently displaying on the display of the connected power system the estimated energy savings provided by the ON/OFF schedule of the connected power system for each of two or more groups of the plurality of the smart sockets and the corresponding operational energy usage of each of the two or more groups of the plurality of the smart sockets.

11. The method of any of claims 1-10, further comprising:
receiving a user input via a user interface of the connected power system that defines a unit cost of energy; and
displaying the estimated energy savings on the display in terms of cost.

12. A connected power system for a building, comprising:
a plurality of smart sockets, wherein the plurality of smart sockets each include a measurement unit that is configured to sample an energy that is being delivered by the smart socket to a respective connected appliance, and wherein the plurality of smart sockets each include an ON/OFF switch that when in an ON state allows energy to be delivered by the smart socket to the respective connected appliance and when in an OFF state does not allow energy to be delivered by the smart socket to the respective connected appliance;
a connected power system controller operatively coupled to the plurality of smart sockets, the connected power system controller is configured to provide control commands to each of the plurality of smart sockets to control whether the ON/OFF switch of the respective smart socket is in the ON state or the OFF state, and wherein an ON/OFF schedule of the connected power system controller includes a programmable ON/OFF schedule for each of the plurality of smart sockets that, when activated, controls the ON/OFF switch of the respective one of the plurality of smart sockets in accordance with ON Periods and OFF periods of the respective ON/OFF schedule, the connected power system controller is configured to:
enter a baseline energy mode for a predetermined baseline time period, wherein while in the baseline energy mode the power system controller is configured to disable the programmable ON/OFF schedule of each of the plurality of smart sockets and control the ON/OFF switch of each of the plurality of smart sockets to remain in the ON state over the baseline time period;
while in the baseline energy mode, monitor via the measurement unit of each of the plurality of smart sockets the energy that is delivered by the respective smart socket to their respective connected appliance, resulting in a baseline energy usage;
exit the baseline energy mode and enter an operational mode;
while in the operational mode, activate the ON/OFF schedule of each of the plurality of smart sockets, and monitor via the measurement unit of each of the plurality of smart sockets for each of the plurality of smart sockets the energy that is delivered by the respective smart socket to their respective connected appliance, resulting in an operational energy usage;
determine an estimated energy savings provided by the ON/OFF schedule of the connected power system based on the baseline energy usage determined during the baseline energy mode in conjunction with the OFF periods of the ON/OFF schedule of the connected power system and the operational energy usage determined during the operational mode; and
concurrently display the estimated energy savings provided by the ON/OFF schedule of the connected power system and the operational energy usage on a display of the connected power system.

13. A non-transitory computer readable medium storing instructions thereon that when executed by one or more processors causes the one or more processors to:
enter a baseline energy mode of a connected power system controller for a predetermined baseline time period, wherein while in the baseline energy mode the one or more processors disable a programmable ON/OFF schedule of each of the plurality of smart sockets, and control an ON/OFF switch of each of a plurality of smart sockets to remain in the ON state over the baseline time period;
while in the baseline energy mode, monitor via a measurement unit of each of the plurality of smart sockets the energy that is delivered by the respective smart socket to their respective connected appliance, resulting in a baseline energy usage;
exit the baseline energy mode and enter an operational mode;
while in the operational mode, activate the programmable ON/OFF schedule of each of the plurality of smart sockets, and monitor via the measurement unit of each of the plurality of smart sockets for each of the plurality of smart sockets the energy that is delivered by the respective smart socket to their respective connected appliance, resulting in an operational energy usage;
determine an estimated energy savings provided by an ON/OFF schedule of the connected power system based on the baseline energy usage determined during the baseline energy mode in conjunction with OFF periods of the ON/OFF schedule of the connected power system and the operational energy usage determined during the operational mode; and
concurrently display the estimated energy savings provided by the ON/OFF schedule of the connected power system and the operational energy usage on a display.
